(19) Europäisches Patentamt / European Patent Office / Office européen des brevets

(11) **EP 1 408 604 B1**

(12) **EUROPEAN PATENT SPECIFICATION**

(45) Date of publication and mention
of the grant of the patent:
**09.10.2013   Bulletin 2013/41**

(51) Int Cl.:
***H02M 3/07*** *(2006.01)*

(21) Application number: **02425616.6**

(22) Date of filing: **11.10.2002**

(54) **A charge pump with current peak noise reduction**

Ladungspumpe mit Stromspitzengeräuschminderung

Pompe de charge avec réduction du bruit des pics de courant

(84) Designated Contracting States:
**DE FR GB IT**

(43) Date of publication of application:
**14.04.2004   Bulletin 2004/16**

(73) Proprietor: **STMicroelectronics Srl**
**20864 Agrate Brianza (IT)**

(72) Inventor: **Vimercati, Daniele**
**20048 Carate Brianza (MI) (IT)**

(74) Representative: **Bartle, Robin Jonathan**
**WP Thompson**
**Coopers Building**
**Church Street**
**Liverpool**
**L1 3AB (GB)**

(56) References cited:
**EP-A- 0 856 935     US-A- 5 889 427**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

## Description

The present invention relates to a charge pump with current peak noise reduction.

A charge pump is a particular voltage booster circuit, which is used to generate a voltage higher than its power supply voltage. For example, charge pumps commonly find application in an integrated circuit including a non-volatile memory with floating-gate transistors. In this case, a high voltage is needed to program and/or erase the memory. In order to avoid the need to provide an external power supply voltage of high value, the integrated circuit is designed to have one or more internal charge pumps for producing the high voltage from the (lower) power supply voltage.

Operation of a charge pump is based on the continuous accumulation and transfer of electric charge in a sequence of capacitors. Particularly, each capacitor has a free terminal, which is controlled by a signal switching between a low voltage and a high voltage; the control signals of adjacent capacitors are always anti-phase. In this way, when the control signal is at low voltage the capacitor is charged by the previous capacitor; when the control signal switches to the high voltage, the accumulated charge is transferred to the next capacitor.

The charging and discharging of the capacitors involve the absorption of current from a power source supplying the charge pump. The absorbed current shows an impulsive waveform, with a peak at every switching of the control signals. These current peaks have a relatively high intensity; for example, in a charge pump working at a frequency of tens of MHz and with capacitors having a capacity of hundreds of pF, the current peaks may reach some tens of mA.

The current peaks are source of noise, which propagates to other units in the integrated circuit. This problem is particular acute in modern integrated circuits, wherein internal conductive tracks distributing the power supply voltage to the different units of the integrated circuit are very narrow (and then with high resistance and low current capability).

EP- A- 0856935 (Denso Corporation) describes a charge pump circuit have a plurality of capacitors and an oscillator to cause the capacitors to be alternately charged. In one of the embodiments described, the capacitors are to be charged through respective constant-current circuits. Such charge pump corresponds to the preamble of claim 1.

It is an object of the present invention to overcome the above-mentioned drawbacks. In order to achieve this object, a charge pump as set out in the first claim is proposed.

In accordance with a first aspect of the present invention, there is a charge pump including a sequence of capacitive blocks and means for selectively transferring electric charge from a first capacitive block of the capacitive blocks to a second capacitive block of the capacitive blocks, the means for selectively transferring to be enabled alternatively during a first phase and a second phase,

the charge pump further includes first limiting means (255) to limit a current flowing through the first capacitive block during the first phase and the second phase, and second limiting means to limit a current flowing through the second capacitive block during the first phase and the second phase; and

further including, for each of the first and second capacitive blocks, first connecting means to connect a corresponding capacitive block of the first and second capacitive blocks to a non-ground power supply terminal through a first path during the first phase, and second connecting means to connect the corresponding capacitive block to a ground terminal through a second path during the second phase, each of the first and second limiting means forming part of a single one of the first path and the second path, characterised in that a source or a drain of each of the first and second limiting means is connected to a ground terminal, and a gate of each of the first and second limiting means is arranged to receive a same output based on a supply voltage provided by the second non-ground power supply terminal.

In accordance with a second aspect of the present invention, there is a method of operating a charge pump including a sequence of capacitive blocks, the method including the steps of:

selectively transferring electric charge from a first capacitive block of the capacitive blocks to a second capacitive block of the capacitive blocks, the selective transferring of the electric charge being enabled alternatively during a first phase and a second phase;

limiting a current flowing through a corresponding one of the first and second capacitive blocks during the first phase and the second phase using a corresponding one of a first limiting means coupled to the first capacitive block, and a second limiting means coupled to the second capacitive block, each limiting means forming part of a single one of a first path and a second path; and connecting each of the first and second capacitive blocks to a non-ground power supply terminal through the first path during the first phase and connecting the capacitive block to a ground terminal through the second path during the second phase, characterized in that a source or a drain of each of the first and second limiting means is connected to a ground terminal, and a gate of each of the first and second limiting means receives a same output based on a supply voltage provided by the second non-ground power supply terminal.

In addition, the present invention proposes a non-volatile memory device including the charge pump; a corresponding method of operating a charge pump is also encompassed.

Further features and the advantages of the solution according to the present invention will be made clear by the following description of a preferred embodiment thereof, given purely by way of a non-restrictive indication, with reference to the attached figures, in which:

Figure 1 is a schematic block diagram of a flash memory in which the charge pump of the invention can be used;
Figure 2 shows a simplified circuit scheme of the charge pump; and
Figure 3 is a time diagram of some electric quantities of the charge pump.

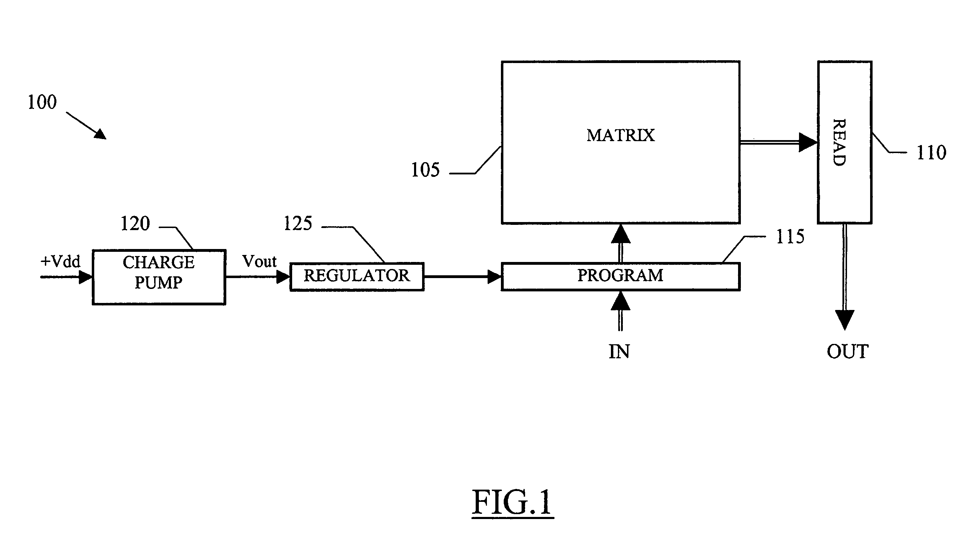

With reference in particular to Figure 1, a flash memory 100 is illustrated. The flash 100 is integrated in a chip of semiconductor material, and includes an array 105 of memory cells (for example, with a so-called NOR architecture). The matrix 105 also embeds a column decoder and a row decoder, which are used to select the memory cells (such as 16) of a word that is simultaneously processed by the flash 100 (in response to a corresponding address).

Each memory cell consists of a floating gate MOS transistor. The memory cell in a non-programmed (or erased) condition features a low threshold voltage (associated with a logic value 1). The memory cell is programmed by injecting electric charge into its floating gate; in this condition, the memory cell features a high threshold voltage (associated with a logic value 0).

A module 110 (typically consisting of a bank of sense amplifiers) is used to read the values stored in the memory cells of a selected word. A module 115 (typically consisting of a bank of program loads) is instead used to program the memory cells of one or more selected words. Each program load drives a memory cell; the program load applies a program pulse having sufficient energy to cause some of the electrons (hot electrons) flowing through a channel of the transistor to be injected into its floating gate. As a consequence, the threshold voltage of the memory cell is increased.

A charge pump 120 receives an external power supply voltage +Vdd (for example, 3V relative to a reference voltage or ground); the charge pump 120 generates an internal power supply voltage Vout of higher value (for example, up to 8.5V). The internal power supply voltage is provided to a regulator 125, which maintains the internal power supply voltage substantially constant under changing load conditions. The regulator 125 directly supplies the program loads 115.

However, the concepts of the present invention are also applicable when the flash has a different architecture, when the memory cells store multiple bits, when the flash has a different word length, when the charge pump is used in another non- volatile memory device (such as an $E^2PROM$), and the like.

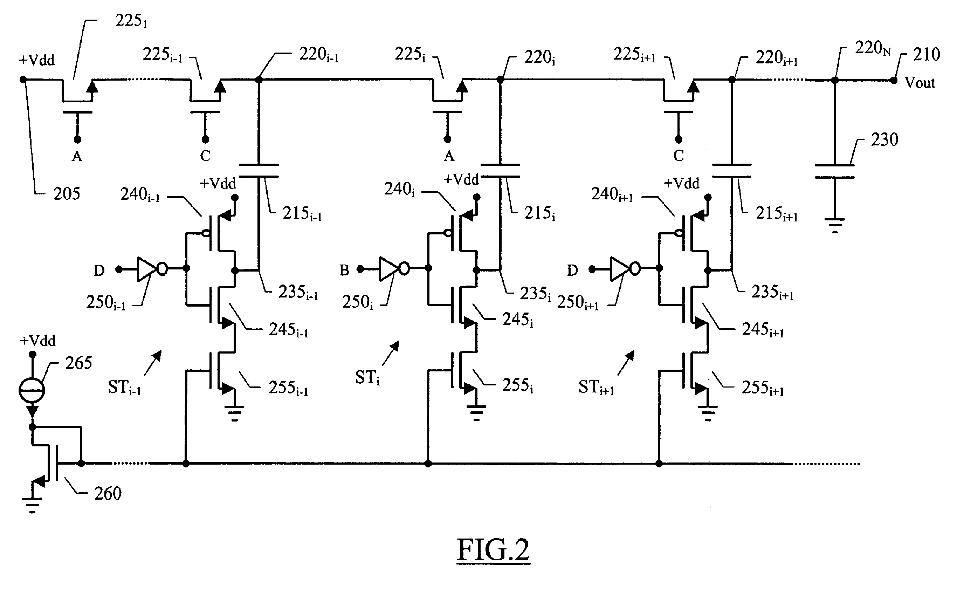

Considering now Figure 2, the circuit scheme of the charge pump 120 is illustrated. The charge pump 120 consists of a sequence of stages $ST_i$, with i=1..N (for example, N=8). The stages are cascade connected between an input terminal 205 (receiving the power supply voltage +Vdd) and an output terminal 210 (generating the voltage Vout of higher value).

Each stage $ST_i$ includes a capacitor $215_i$ having a relatively high capacitance (such as 1-10pF). A plate of the capacitor $215_i$ (node $220_i$) is connected to a source terminal of an NMOS pass-transistor $225_i$; the drain terminal of the pass-transistor $225_i$ is connected to the node $220_{i-1}$ of the previous stage $ST_{i-1}$ (the drain terminal of the first pass-transistor $225_1$ is connected to the input terminal 205). The last node $225_N$ is connected to the output terminal 210. An output capacitor 230 is further connected between the output terminal 210 and a ground terminal.

Two signals A and C are used to control the pass transistors of the sequence. The control signals A and C are anti-phase; the control signal of each stage $ST_i$ switches with a high frequency f (typically of some tens of MHz) between a low value (equal to the maximum voltage at the node $220_i$) and a high value (equal to this voltage plus the power supply voltage +Vdd). Two adjacent stages are always provided with opposed control signals; for example, the control signal A is applied to the gate terminal of the pass-transistor $225_i$, while the control signal C is applied to the gate terminal of the previous pass-transistor $225_{i-1}$ and to the gate terminal of the next pass-transistor $225_{i+1}$.

The other plate of the capacitor $215_i$ (node $235_i$) is connected to the output terminal of a non-inverting buffer (which supplies a high current to the capacitor $215_i$). In detail, an inverter is formed by a PMOS transistor $240_i$ and an NMOS transistor $245_i$. The transistor $240_i$ has the source terminal connected to a power supply terminal (+Vdd). The drain terminal of the transistor $240_i$ and the drain terminal of the transistor $245_i$ are both connected to the node $235_i$. The gate terminals of the transistors $240_i$ and $245_i$ are connected together to the output terminal of a further inverter $250_i$.

Two additional signals B and D are used to control the capacitors of the sequence; the control signals B and D are anti-phase and they switch between a low voltage (0V) and a high voltage (+Vdd) with the frequency f (out of phase with respect to the control signals A and C). Two adjacent stages are always provided with opposed control signals; for example, the control signal B is applied to the input terminal of the inverter $250_i$, while the control signal D is applied to the input terminal of the previous inverter $250_{i-1}$ and to the input terminal of the next inverter $250_{i+1}$.

Each stage $ST_i$ also includes a current limiter, which prevents the amplitude of a current flowing through the same from exceeding a predetermined maximum value. The current limiter is formed by an NMOS transistor $255_i$, having the source terminal connected to the ground terminal and the drain terminal connected to the source terminal of the transistor $245_i$. The transistor $255_i$ defines a first leg of a current mirror; a further NMOS transistor 260 forms the second leg of the current mirror, which is common for all the stages of the charge pump 120. Particularly, the gate terminal of each transistor $255_i$ is connected to the gate terminal of the transistor 260; the transistor 260 has the source terminal connected to the ground terminal and the drain terminal short-circuited to its gate terminal. A current generator 265 is connected between the drain terminal of the transistor 260 and the power supply terminal; the generator 265 provides a constant current Im.

During operation of the charge pump, in a first phase the control signal A is high and the control signal B is low (with the control signal C that is low and the control signal D that is high). As a consequence, in each pair of adjacent stages the pass-transistor $225_i$ in on and the pass-transistor $225_{i+1}$ is off. At the same time, the output terminal of the inverter $250_i$ is brought to the power supply voltage +Vdd, so that the transistor $245_i$ is on and the transistor $240_i$ is off; in the meanwhile, the output terminal of the inverter $250_{i-1}$ is brought to ground, so that the transistor $245_{i-1}$ is off and the transistor $240_{i-1}$ is on. In this condition, the capacitor $215_i$ is charged by the previous stage $ST_{i-1}$ (with the first capacitor that is charge by the power supply directly).

When the control signal A is brought to low voltage (and the control signal C is brought to high voltage), the pass-transistor $225_i$ is switched off and the pass-transistor $225_{1+1}$ is switched on. The control signal B is then brought to high voltage (and the control signal D is brought to low voltage). As a consequence, the output terminal of the inverter $250_i$ is brought to ground, so that the transistor $245_i$ is switched off and the transistor $240_i$ is switched on; at the same time, the output terminal of the inverter $250_{i+1}$ is brought to the power supply voltage +Vdd, so that the transistor $245_{i+1}$ is switched on and the transistor $240_{i+1}$ is switched off. In this phase, the voltage at the node $235_i$ goes to +Vdd and the voltage at the node $220_i$ goes to +Vdd plus the voltage at the capacitor $215_i$ (with the electric charge accumulated in the capacitor $215_i$ that is transferred to the next stage $ST_{i+1}$).

Therefore, the first capacitor is charged to a voltage +Vdd, the second capacitor is charged to a voltage 2*Vdd, and so on until the last capacitor that is charged to a voltage N*Vdd. The electric charge accumulated in the last capacitor is shared with the output capacitor 230, so as to drive a load (not shown in the figure) that is connected to the output terminal 210.

Whenever the control signal B switches from high voltage to low voltage (and the control signal D switches from low voltage to high voltage) the charging of each generic capacitor $215_i$ (by the previous stage $ST_{i-1}$) generates a transient phase; in this phase, a current is absorbed from the power supply through the transistor $240_{i-1}$. Likewise, when the control signal B switches from low voltage to high voltage (and the control signal D switches from high voltage to low voltage) the discharg-

ing of the capacitor $215_i$ (by the next stage $ST_{i+1}$) generates a further transient phase; in this phase, a current is absorbed from the power supply through the transistor $240_i$.

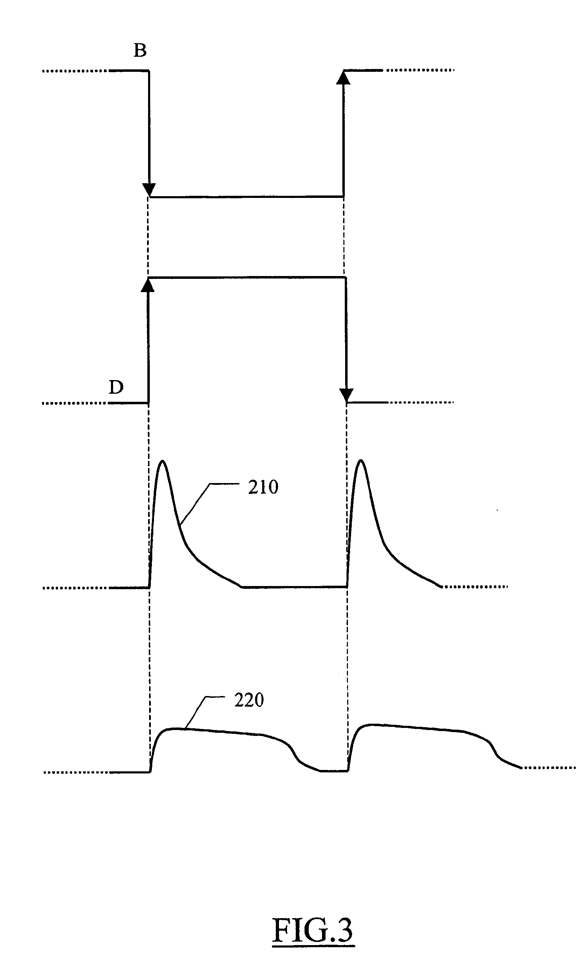

In the charge pumps known in the art (without any current limiter) the current absorbed from the power supply would have an impulsive waveform. Particularly, the waveform is substantially exponential, with a high peak at every switching of the control signals B and D (as shown by the line 210 in Figure 3).

Conversely, in the proposed solution the current absorbed from the power supply is limited by the transistor $255_i$; in fact, the current flowing through the transistor $255_i$ cannot exceeds the current Im mirrored by the circuit $255_i$, 260. As a consequence, the current absorbed from the power supply has a waveform that is substantially constant to its mean value (as shown by the line 220 in Figure 3) .

The current Im is set to a value so as not to interfere with operation of the charge pump. Denoting with Cp the capacity of the capacitor $215_i$, the electric charge transferred from and to the adjacent stages is Cp*Vdd. This electric charge is transferred in a half-period of the control signals B and D (1/2f); therefore, the value of the current Im must be:

$$\mathrm{Im} \geq \frac{Cp \cdot Vdd}{\dfrac{1}{2 \cdot f}} \geq 2 \cdot f \cdot Cp \cdot Vdd$$

However, the concepts of the present invention are also applicable when the charge pump includes another number of stages, when different voltages are used, or when the capacitors are replaced with equivalent blocks (even with a different capacitance) . Similar considerations apply if the control signals work at another frequency, if the MOS transistors are replaced with equivalent electronic switches, if the charge pump has another structure (for example, including diodes as self- timed switches, or other equivalent means for transferring electric charge along the sequence of capacitors), and the like.

More generally, the present invention proposes a charge pump. The charge pump includes a sequence of capacitive blocks. Means are provided for selectively transferring electric charge from each capacitive block to a next capacitive block; the means for transferring of each pair of adjacent capacitive blocks are enabled alternatively during a first phase and a second phase, respectively. The charge pump of the invention further includes means for limiting a current flowing through each capacitive block during the first phase and the second phase.

The proposed solution strongly reduces the current peaks during the charging and discharging of the capacitors; in fact, the current absorbed by the charge pump is substantially constant to its mean value.

This structure has a beneficial effect on the noise induced on the power supply, thereby avoiding undesired interactions with other possible units.

The solution of the invention is particularly advantageous in integrated circuits wherein the internal conductive tracks distributing the power supply voltage to the different units of the integrated circuit are very narrow (and then with a high resistance and a low current capability); however, different applications of the devised charge pump are not excluded.

According to the invention, each element for limiting the current is inserted in a single one of the paths connecting the corresponding capacitor alternatively to the ground terminal and to the power supply terminal.

In this way, the structure of these elements is simplified (since the current to be controlled always flows in a single direction, irrespective of its directing through the capacitor).

In fact, the current absorbed at every switching always involves the two different paths associated with adjacent capacitors.

The elements for limiting the current are connected between the ground terminal and a corresponding electronic switch, and a gate of each of them is arranged to receive a same output based on a supply voltage provided by the non ground power supply terminal.

The proposed arrangement simplifies the implementation of the element for limiting the current.

In a preferred embodiment of the invention, current limiters are used for preventing the current flowing through each capacitor from exceeding a predetermined maximum value.

This feature ensures a good control of the dynamic behavior of the charge pump.

Advantageously, the maximum value of the current is defined so as to allow the transfer of the required electric charge in every half- period of the control signals.

As a consequence, the current limiters do not interfere with operation of the charge pump.

A suggested implementation of the current limiter consists of a first leg of a current mirror (having the second leg connected to a constant current generator).

The proposed circuit is very simple, but at the same time effective.

A way to further improve the solution is to use a single second leg and a single constant current generator that are common to all the current mirrors.

This architecture strongly simplifies the structure of the whole charge pump.

Typically, one or more charge pumps are integrated in a non- volatile memory device; however, different applications of the charge pump are not excluded.

Naturally, in order to satisfy local and specific requirements, a person skilled in the art may apply to the solution described above many modifications and alterations all of which, however, are included within the scope of protection of the invention as defined by the following claims.

## Claims

1. A charge pump (120) including a sequence of capacitive blocks (215) and means (255, 240-250) for selectively transferring electric charge from a first capacitive block of the capacitive blocks to a second capacitive block of the capacitive blocks, the means for selectively transferring to be enabled alternatively during a first phase and a second phase,
the charge pump further including first limiting means (255) to limit a current flowing through the first capacitive block during the first phase and the second phase, and second limiting means (255) to limit a current flowing through the second capacitive block during the first phase and the second phase; and further including, for each of the first and second capacitive blocks (215), first connecting means (240, 250) to connect a corresponding capacitive block of the first and second capacitive blocks to a non-ground power supply terminal through a first path (240) during the first phase, and second connecting means (245, 250) to connect the corresponding capacitive block to a ground terminal through a second path (245, 255) during the second phase, each of the first and second limiting means forming part of a single one (245, 255) of the first path and the second path, **characterised in that** a source or a drain of each of the first and second limiting means is connected to the ground terminal, and a gate of each of the first and second limiting means is arranged to receive a same output based on a supply voltage provided by the non-ground power supply terminal.

2. The charge pump (120) according to claim 1, wherein the first connecting means (240, 250) includes a first electronic switch (240) and the second connecting means (245, 250) includes a second electronic switch (245), the first and the second electronic switches to be closed alternatively in response to a first control signal (B,D), the control signals of the first and second capacitive blocks having opposed values and having a same frequency as, but being out of phase with, a second control signal (A.C) to a third electronic switch (225) connected between the first and second capacitive blocks.

3. The charge pump (120) according to claim 1 or claim 2, wherein each of the first and second limiting means include a current limiter (255) to prevent the amplitude of a current flowing therethrough from exceeding a predetermined maximum value.

4. The charge pump (120) according to claim 3, wherein a capacity of the first capacitive block (215) has a first value, a maximum voltage oscillation at the first capacitive block between the first and the second phases has a second value, and a frequency of the first and the second phases has a third value, the predetermined maximum value being at least equal to twice the first value multiplied by the second value and by the third value.

5. The charge pump (120) according to claim 3 or 4, wherein the current limiter includes a first leg (255) of a current mirror (255, 260) having a second leg (260) connected to a constant current generator (265) providing a current having the predetermined maximum value.

6. The charge pump (120) according to claim 5, wherein a single second leg (260) and a single constant current generator (265) are common to the current limiter (255) for each of the first and second capacitive blocks (215).

7. A non-volatile memory device (100) integrated in a chip of semiconductor material, the device including at least one charge pump (120) according to any claim from 1 to 6.

8. The charge pump (120) according to claim 1, further comprising a mirrored transistor, a source or a drain of the mirrored transistor coupled to the non-ground power supply terminal and a gate of the mirrored transistor coupled to the gate of each of the first and second limiting means, a first current flowing the corresponding one of the first and second limiting means not to exceed a second current flowing through the mirrored transistor.

9. A method of operating a charge pump (120) including a sequence of capacitive blocks (215), the method including the steps of:

selectively transferring electric charge from a first capacitive block of the capacitive blocks to a second capacitive block of the capacitive blocks, the selective transferring of the electric charge being enabled alternatively during a first phase and a second phase;
limiting a current flowing through a corresponding one of the first and second capacitive blocks during the first phase and the second phase using a corresponding one of a first limiting means (255) coupled to the first capacitive block, and a second limiting means coupled to the second capacitive block, each limiting means forming part of a single one (245, 255) of a first path and a second path; and
connecting each of the first and second capacitive blocks to a non-ground power supply terminal through the first path during the first phase and connecting the capacitive block to a ground terminal through the second path during the second phase, **characterized in that** a source or a drain of each of the first and second limiting means is connected to a ground terminal, and a gate of each of the first and second limiting means receives a same output based on a supply voltage provided by the non-ground power supply terminal.

## Patentansprüche

1. Ladungspumpe (120), die Folgendes umfasst: eine Folge von kapazitiven Blöcken (215) und Mittel (255, 240-250) zum selektive Übertragen elektrischen Ladung von einem ersten kapazitiven Block der kapazitiven Blökke zu einem zweiten kapazitive Block der kapazitiven Blöcke, wobei das Mittel zum selektiven Übertragen alternativ während einer ersten Phase und einer zweiten Phase aktiviert werden soll,
wobei die Ladungspumpe ferner Folgendes umfasst: ein erstes Begrenzungsmittel (255), um einen Strom zu begrenzen, der während der ersten Phase und der zweite Phase durch den ersten kapazitiven Block fließt, sowie ein zweites Begrenzungsmittel (255), um einen Strom zu begrenzen, der während der ersten Phase und der zweiten Phase durch den zweiten kapazitiven Block fließt; und
wobei die Ladungspumpe ferner Folgendes umfasst: für jeden der ersten und zweiten kapazitiven Blöcke (215), ein erstes Verbindungsmittel (240, 250) für den Anschluss eines entsprechenden kapazitiven Blocks der und zweiten kapazitiven Blöcke an einen nicht-geerdeten Stromversorgungsanschluss über einen ersten Weg (240) während der ersten Phase und ein zweites Verbindungsmittel (245, 250) für den Anschluss des entsprechenden kapazitiven Blocks an einen geerdeten Anschluss über einen zweiten Weg (245, 255) während der zweiten Phase, wobei jedes des ersten und des zweiten Begrenzungsmittels Teil eines einzelnen (245, 255) des ersten Wegs und des zweiten Wegs ist, **dadurch gekennzeichnet, dass** eine Quelle oder eine Ableitung jedes des ersten und des zweiten Begrenzungsmittels mit dem geerdeten Anschluss verbunden ist und ein Tor jedes des ersten und des zweiten Begrenzungsmittels so angeordnet ist. dass es eine gleiche Ausgabe basierend auf einer Versorgungsspannung empfängt, die von dem nicht-geerdeten Stromversorgungssanschluss angelegt wird.

2. Ladungspumpe (120) nach anspruch 1, wobei das erste Verbindungsmittel (240, 250) einen ersten elektronischen Schalter (240) und das zweite Verbindungsmittel (245, 250) einen zweiten elektronischen Schalter (245) umfasst, wobei der erste und der zweite elektronische Schalter als Reaktion auf ein erstes Steuersignal (B, D) alternativ geschlossen werden sollen, wobei die Steuersignale der ersten und zweiten kapazitiven Blöcke entgegengesetzte werte und die gleiche Frequenz wie ein zweites Steuersignal (A. C) ausweisen, jedoch phasenverschoben zu diesem zweiten Steuersignal sind, das zu einem dritten elektronischen schalter (225) geleitet wird, der zwischen den ersten und zweiten kapazitiven Blöcken angeschlossen ist.

3. Ladungspumpe (120) nach Anspruch 1 oder Anspruch 2, wobei jedes des ersten und des zweiten Begrenzungsmittels einen Strombegrenzer (255) umfasst, damit verhindert wird, dass die Amplitude eines hindurchfließenden Stroms einen vorgegebenen Maximalwert überschreitet.

4. Ladungspumpe (120) nach Anspruch 3, wobei eine Kapazität des ersten kapazitiven Blocks (215) einen ersten Wert aufweist, eine maximale Spannungsschwingung am ersten kapazitiven Block zwischen der ersten und der zweiten Phase einen zweiten Wert aufweist und eine Frequenz der ersten und der zweiten Phase einen dritten Wert aufweist, wobei der vorbestimnte maximale Wert mindestens dem Zweifachen des ersten Werts multipliziert mit dem zweiten Wert und dem dritten Wert entspricht.

5. Ladungspumpe (120) nach Anspruch 3 oder 4, wobei der Strombegrenzer einen ersten Schenkel (255) eines Stromspiegels (255, 260) umfasst, dessen zweiter Schenkel (260) an einen Konstantstromgenerator (265) angeschlossen ist, der einen Strom mit vorgegebenen Maximalwert liefert.

6. Ladungspumpe (120) nach Anspruch 5, wobei ein einzelner zweiter Schenkel (260) ein einzelner Konstantstromgenerator (265) Strombegrenzer (255) für jeden der ersten und zweiten kapazitiven Blöcke (215) gemein sind.

7. Nichtflüchtige Speichervorrichtung (100), die in einem Chip aus Halbleitermaterial integriert ist, wobei die Vorrichtung mindestens eine Ladungspumpe (120) nach einem der Ansprüche 1 bis 6 umfasst.

8. Ladungspumpe (120) nach Anspruch 1, die ferner einen gespiegelten Transistor umfasst, wobei eine Quelle oder eine Ableitung des gespiegelten Transistors mit dem nicht-geerdeten Stromversorgungsanschluss gekoppelt ist und ein Tor des Transistors mit dem Tor jedes des ersten und des zweiten Begrenzungsmittels gekoppelt ist, wobei ein erster Strom, der durch das entsprechende des ersten und des zweiten Begrenzungsmittels fließt, einen zweiten Strom, der durch den gespiegelten Transistor fließt, nicht überschreiten darf.

9. Verfahren zum Betreiben einer Ladungspumpe (120), die eine Folge von kapazitiven Blöcken (215) umfasst, wobei das Verfahren folgende Schritte umfasst:

selektives Übertragen elektrischen Landung von einem ersten kapazitiven Block der kapazitiven Blöcke zu einem zweiten kapazitiven Block der kapazitiven Blöcke, wobei die selektive Übertragung der elektrischen Ladung alternativ während einer ersten Phase und einer zweiten Phase aktiviert wird;
Begrenzen eines Stroms, der während der ersten Phase und der zweiten Phase durch einen entsprechenden der ersten und zweiten kapazitiven Blöcke fließt, unter Verwendung entsprechenden ersten Begrenzungsmittels (255), das mit dem ersten kapazitiven Block gekoppelt ist, und eines zweiten Begrenzungsmittels, das mit dem zweiten kapazitiven Block gekoppel ist, wobei jedes Begrenzungsmittel Teil eines einzelnen (245, 255) eines ersten Pfads und eines zweiten Pfads ist, und
Anschließen jedes der ersten und zweiten kapazitiven Blöcke an einen nicht-geerdeten Stromversorgungsanschluss über den ersten weg während der ersten Phase und Anschließen des kapazitiven Blocks an einen geerdeten Anschluss über den zweiten Weg während der zweiten Phase, **dadurch gekennzeichnet, dass** eine Quelle oder eine Ableitung jedes des ersten und des Begrenzungsmittels mit einem geerdeten Anschluss verbunden ist und ein Tor jedes des ersten und des zweiten Begrenzungsmittels die gleiche Ausgabe basierend auf einer Versorgungsspannung erhält, die durch nicht-geerdeten Stromversorgungsanschluss bereitgestellt wird.

**Revendications**

1. Une pompe de charge (120) comprenant une séquence de blocs capacitifs (215) et un mayen (255, 240-250) de transfert sélectif d'une charge électrique d'un premier bloc capacitif des blocs capacitifs vers un deuxième bloc capacitif des blocs capacitifs, le moyen de transfert sélectif étant destiné à être activé de manière alternée au cours d'une première phase et d'une deuxième phase,
la pompe de charge comprenant en outre un premier mayen de limitation (255) destiné à limiter un courant circulant au travers du premier bloc capacitif au cours de la première phase et de la deuxième phase, et un deuxième moyen de limitation (255) destiné à limiter un courant circulant au travers du deuxième bloc capacitif au cours de la première phase et de la deuxième phase, et

comprenant en outre, pour chacun des premier et deuxième blocs capacitifs (215), un premier moyen de raccordement (240, 250) destiné à raccorder un bloc capacitif correspondant des premier et deuxième blocs capacitifs à une borne d'alimentation électrique non mise à la terre par l'intermédiaire d'un premier trajet (240) au cours de la première phase, et un deuxième moyen de raccordement (245, 250) destiné à raccorder le bloc capacitif correspondant à une borne de terre par l'intermédiaire d'un deuxième trajet (245, 255) au cours de la deuxième phase, chacun des premier et deuxième moyens de limitation formant une partie d'un trajet unique (245, 255) du premier trajet et du deuxième trajet, **caractérisée en ce qu'**une source ou un drain de chacun des premier et deuxième moyens de limitation est raccordé à la borne de terre, et une grille de chacun des premier et deuxième moyens de limitation est agencée de façon à recevoir une même sortie en fonction d'une tension d'alimentatîon fournie par la borne d'alimentation électrique non mise à la terre.

2. La pompe de charge (120) selon la Revendication 1, où le premier moyen de raccordement (240, 250) comprend un premier commutateur électronique (240) et le deuxième moyen de raccordement (245, 250) comprend un deuxième commutateur éleclronique (245), les premier et deuxième commutateurs électroniques devant être fermés de manière alternée en réponse à un premier signal de commande (B, D), les signaux de commande des premier et deuxième blocs capacitifs possédant des valeurs opposées et possédant une même fréquence que, mais étant déphasés par rapport à, un deuxième signal de commande (A,C) vers un troisième commutateur électronique (225) raccordé entre les premier et deuxième blocs capacitifs.

3. La pompe de charge (120) selon la Revendication 1 ou 2, où chacun des premier et deuxième moyens de limitation comprend un limiteur de courant (255) destiné à empêcher l'amplitude d'un courant circulant au travers de celui-ci de dépasser une valeur maximale prédéterminée.

4. La pompe de charge (120) selon la Revendication 3, où une capacité du premier bloc capacitif (215) possède une première valeur, une oscillation de tension maximale au niveau du premier bloc capacitif entre la première et la deuxième phases possède une deuxième valeur, et une fréquence de la première et de la deuxième phases possède une troisième valeur, la valeur maximale prédéterminée étant au moins égale à deux fois la première valeur multipliée par la deuxième valeur et par la troisième valeur.

5. La pompe de charge (120) selon la Revendication 3 ou 4, où le limiteur de courant comprend un premier serment (255) d'un miroir de courant (255, 260) possédant un deuxième segment (260) raccordé à un générateur de courant constant (265) fournissant un courant possédant la valeur maximale prédéterminée.

6. La pompe de charge (120) selon la Revendication 5, où un deuxième segment unique (260) et un générateur de courant constant unique (265) sont communs au limiteur de courant (255) pour chacun des premier et deuxième blocs capacitifs (215).

7. Un dispositif à mémoire non volatile (100) intégré à une puce de matériau semiconducteur, le dispositif comprenant au moins une pompe de charge (120) selon l'une quelconque des Revendications 1 à 6.

8. La pompe de charge (120) selon la Revendication 1, comprenant en outre un transistor en miroir, une source ou un drain du transistor en miroir couplé à la borne d'alimentation électrique non mise à la terre et une grille du transistor en miroir couplée à la grille de chacun des premier et deuxième moyens de limitation, un premier courant circulant au travers du moyen correspondant des premier et deuxième moyens de limitation ne devant pas dépasser un deuxième courant circulant au travers du transistor en miroir.

9. Un procédé d'actionnement d'une pompe de charge (120) comprenant une séquence de blocs capacitifs (215), le procédé comprenant les opérations suivantes:

le transfert sélectif d'une charge électrique d'un premier bloc capacitif des blocs capacitifs vers un deuxième bloc capacitif des blocs capacitifs, le transfert sélectif de la charge électrique étant activé de manière alternée au cours d'une première phase et d'une deuxième phase, la limitation d'un courant circulant au travers d'un bloc correspondant des premier et deuxième blocs capacitifs au cours de la première phase et de la deuxième phase au moyen d'un moyen de limitation correspondant d'un premier moyen de limitation (255) couplé au premier bloc capacitif et d'un deuxième moyen de limitation couplé au deuxième bloc capacitif, chaque moyen de limitation format une partie d'un trajet unique (245, 255) d'un premier trajet et d'un deuxième trajet, et le raccordement de chacun des premier et deuxième blocs capacitifs à une borne d'alimentation électrique non mise à la terre par l'intermédiaire du premier trajet au cours de la première phase et le raccordement du bloc capacitif à une borne de terre par l'intermédiaire du deuxième trajet au cours de la deuxième phase, **caractérisé en ce qu'**une source ou un drain de chacun des premier et deuxième moyens de limitation est raccordé à une borne de terre, et une grille de chacun des premier et deuxième moyens de limitation reçoit une même sortie en fonction d'une tension d'alimentation fournie par la borne d'almentation électrique non mise à la terre.

FIG.1

EP 1 408 604 B1

FIG.2

B

D

210

220

FIG.3

**EP 1 408 604 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0856935 A